# EUROPEAN PATENT APPLICATION

(11) **EP 2 447 520 A2**
(43) Date of publication of application: **02.05.2012**
(21) Application number: 11186850.1
(22) Date of filing: 27.10.2011
(51) Int. Cl.: F02K 1/80, F16L 27/10, B64C 29/00

(54) **Compliant sealing joint for an aircraft exhaust system**

(30) Priority: 29.10.2010 US 915778
(71) Applicant: United Technologies Corporation, Hartford, CT 06101 (US)
(72) Inventor: Ruberte Sanchez, Jose E., Jupiter FL Florida 33458 (US); Schuppert, David C., Tequesta FL Florida 33469 (US); Blickenstaff, Jr., William, Jupiter FL Florida 33478 (US); Taubler, James W., Stuart FL Florida 33478 (US); Preston, III, Lon H., Hobe Sound FL Florida 33455 (US)
(74) Representative: Leckey, David Herbert

(57) **Abstract**

A bellows for transporting exhaust (40) from an aircraft engine (10) to a nozzle (50) has a section (45) that is axially moveable and bendable about an axis (75) extending therethrough, a first joint (60) for attaching the section (45) to the engine (10) wherein the section (45) is movable radially relative to the axis (75), and a second joint (65) for attaching the section (45) to the nozzle (50).

## Description

### BACKGROUND

In some aircraft applications, an exhaust nozzle is mounted remotely from an engine. By mounting the nozzle remotely from the engine, the aircraft may have enhanced and desirable flight characteristics. This means generally that there is a connector between the engine exhaust and nozzles.

### SUMMARY

According to an exemplar disclosed herein, a bellows for transporting exhaust from an engine to a nozzle has a section that is axially moveable and bendable about an axis extending therethrough, a first joint for attaching the section to the engine wherein the section is movable radially relative to the axis, and a second joint for attaching the section to the nozzle.

According to a further exemplar disclosed herein, a bellows system for an aircraft includes a multi-piece nozzle, a gas turbine engine that generates thrust, a section that is axially moveable and bendable about an axis extending therethrough, the section transporting the exhaust to the nozzle, a first joint attaching the section to the engine wherein the section is movable radially relative to the axis, and a second joint attaching the section to the nozzle.

### BRIEF DESCRIPTION OF THE DRAWINGS

The various features and advantages of the disclosed examples will become apparent to those skilled in the art from the following detailed description. The drawings that accompany the detailed description can be briefly described as follows.

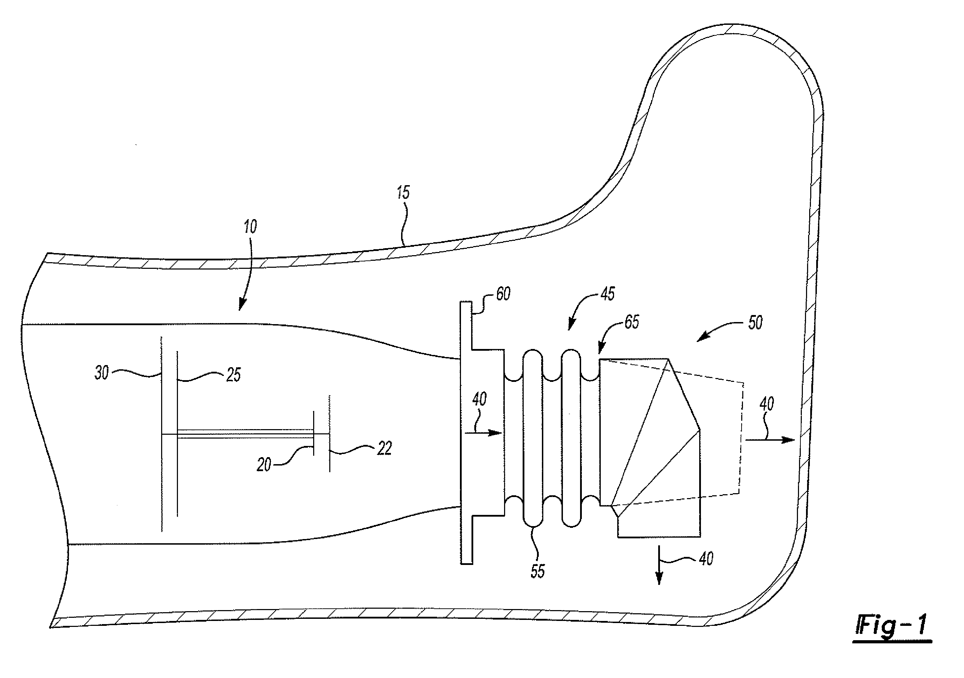

Figure 1 is a cross sectional view, partially in phantom, of an engine and remote nozzle installed in an aircraft and having a compliant sealing joint therebetween.

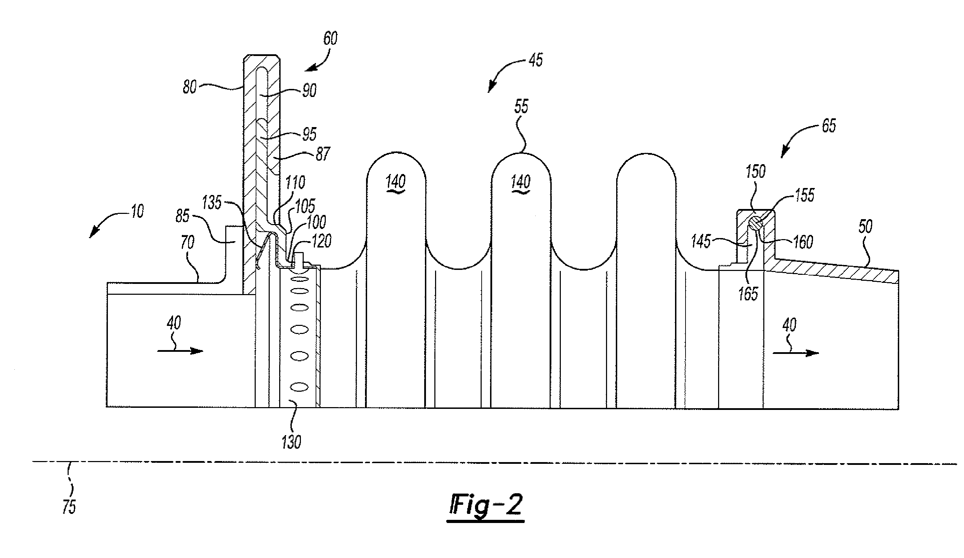

Figure 2 is a cross sectional view of the compliant sealing joint used for the aircraft of Figure 1.

### DETAILED DESCRIPTION OF THE PREFERRED EMBODIMENT

Referring now to the Figures, a gas turbine engine 10 is shown in cross section in an aircraft 15. The gas turbine engine 10 has a high pressure turbine 20, a low pressure turbine 22, a compressor 25, and a fan section 30. During operation, gas turbine engine exhaust 40 is directed through a bellows section 45 to an adjustable, multi-portion nozzle 50 that is mounted in the aircraft 15 independently of the gas turbine engine 10. The bellows section 45 allows aircraft designers the flexibility to optimize nozzle and gas turbine engine placement within the aircraft 15 to achieve required aircraft operating parameters. It also provides mechanical flexibility and helps prevent air leakage during operation. Various types of nozzle 50 may be compatible with this design, ranging from a straight axial nozzle (phantom lines) to an off-axis thrust nozzle (solid lines), or a vectoring nozzle which can move between the two positions.

The bellows section 45 includes a corrugated body 55, a forward, first joint 60 (e.g., near the engine) and an aft, second joint 65 (e.g., near the nozzle). The first joint 60 attaches the body 55 to an aft portion 70 of the gas turbine engine 10 and conducts the exhaust 40 to the nozzle 50. The second joint 65 attaches the body 55 to the nozzle 50. The body 55 is corrugated to allow for bending moments along and relative to an axis 75 that extends through the engine to the nozzle 50. Body 55 also allows axial deformations.

The first joint 60 includes a circular retaining flange 80 that is attached to an abutment 85 encircling the aft portion 70 of the engine 10. The retaining flange 80 has a hook-like, bent-over portion 87 that creates a recess 90 that receives a bellows flange 95. The bellows flange 95 may move radially within the recess 90 to allow radial sliding of the body 55 that may be required given relative movements between the nozzle 50 and the engine 10 during operation thereof

The bellows flange 95 has an axially extending first portion 100, a radially extending second portion 105, an axially extending third portion 110 and a radially extending fourth portion, e.g., the bellows flange 95. The axially extending first portion 100 is attached to the body 55 and is riveted to a finger seal 120.

The finger seal 120 is metallic and has a circular flange 130 that abuts and is riveted to the axially extending first portion 100. The finger seal also has an angled portion 135 that is angled toward the axis 75 and the engine 10, and abuts the axially extending third portion 110 and the retaining flange 80. By being riveted to the axially extending second portion 100 and contacting the retaining flange 80, leakage from the engine 10 between the the bellows flange 95 and the circular retaining flange 80 is minimized. Because the angled portion 135 contacts the axially extending third portion 110 and the retaining flange 80 at an angle, pressure of the engine exhaust 40 tends to force the angled portion 135 against the retaining flange 80 during operation, even if the bellows flange 95 is moving axially within the retaining flange 80.

As stated hereinabove, the bellows section 45 has several corrugations 140 that allow axial and rotational movement about the axis 75 that may be caused by moments on the gas turbine engine 10, the nozzle 50 and the exhaust 40 passing therethrough. The bellow section 45 is axially moveable and may accommodate movement up and down or side to side or combinations thereof. The bellows section 45 is constructed of a material, such as titanium or nickel, which may adjust to the bending requirements of the aircraft 15.

The second joint 65 includes a circular flange 145 attached to the body 55 and a circular hooked appendage 150 attached to or integral with the nozzle 50. The hooked appendage 150 fits over the circular flange 145 in a close-fitting interference manner and may be crimped. The close fit of the second joint 65 allows the second joint 65 to accommodate different thermal coefficients of expansion if the body 55 and the nozzle 50 are made of dissimilar materials like titanium and nickel. A rope seal 155 is disposed in a groove 160 disposed at an end 165 of the circular flange 145 between the hooked appendage 150 and the circular flange 145 to minimize exhaust 40 leakage therebetween. Though a close fitting attachment is shown, the attachment of the second joint may also be done by other means such as bolting.

The bellows section 45 is then able to absorb axial and rotational displacements of the nozzle relative to the engine while minimizing exhaust leakage 40. The bellows section 45 and the first joint 60 allow for larger displacements thereof to accommodate movement of the nozzle 50, which is typically multi-piece, to achieve higher deflections of the nozzle 50 while posing less stresses on the bellows section 45 as compared to a fixed joint (not shown) between the body 55 and the engine 10.

Although a combination of features is shown in the illustrated examples, not all of them need to be combined to realize the benefits of various embodiments of this disclosure. In other words, a system designed according to an embodiment of this disclosure may not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from the essence of this disclosure. The scope of legal protection given to this disclosure can only be determined by studying the following claims.

## Claims

1. A bellows for transporting exhaust (40) from an engine (10) to a nozzle (50) comprises;
a section (45) that is axially movable and bendable about an axis (75) extending therethrough,
a first joint (60) for attaching said section (45) to said engine (10) wherein said section (45) is movable radially relative to said axis (75), and
a second joint (65) for attaching said section (45) to said nozzle (50).

2. The bellows of claim 1 wherein said second joint (65) is capable of being fixed to said nozzle (50).

3. The bellows of claim 1 or 2 wherein said second joint (65) comprises a first flange (145) and a first hook (150) closely fitting over said first flange (145).

4. The bellows of claim 3 wherein said first flange (145) is attachable to one of said section (45) or said nozzle (50) and said first hook (150) is attachable to another of said section (45) or said nozzle (50).

5. The bellows of claim 3 or 4 wherein a rope seal (155) is disposed between said first flange (145) and said hook (150).

6. The bellows of claim 5 wherein said rope seal (155) is disposed in a groove (160) in said first flange (145).

7. The bellows of any preceding claim wherein said first joint (60) comprises a second flange (95) extending radially from one of said section (45) or said engine (10) and a second hook (80) in which said second flange (95) may move.

8. The bellows of claim 7 wherein said second hook (80) extends from another of said section (45) or said engine (10).

9. The bellows of claim 7 or 8 wherein said second flange (95) extends radially from said section (45).

10. The bellows of claim 7, 8 or 9 wherein a seal (120) is disposed between said second flange (95) and said second hook (80).

11. The bellows of claim 10 wherein said seal (120) is a finger seal fixedly attached to said second flange (95).

12. The bellows of claim 11 wherein if said exhaust (40) passes through said section (45) said finger seal (120) is forced against said second hook (80).

13. The bellows of any preceding claim wherein said section (45) is corrugated.

14. A system for an aircraft (15) comprising;
a multi-piece nozzle (50),
a gas turbine engine (10) that creates exhaust (40)
a bellows as set forth in any preceding claim transporting said exhaust (40) to said nozzle (50);
said first joint (60) attaching said section (45) to said engine; and
said second joint (65) attaching said section (45) to said nozzle (50).
